# EUROPEAN PATENT APPLICATION

(11) **EP 1 387 192 A2**
(43) Date of publication of application: **04.02.2004**
(21) Application number: 03077032.5
(22) Date of filing: 30.06.2003
(51) Int. Cl.: G02B 5/30, G02F 1/1337

(54) **Optical compensator with high molecular weight polymeric addenda and process of making the same**

(30) Priority: 12.07.2002 US 194097
(71) Applicant: EASTMAN KODAK COMPANY, Rochester, New York 14650 (US)
(72) Inventor: Shukla, Deepak, Rochester, New York 14650-2201 (US); Elman, James F., Rochester, New York 14650-2201 (US); Carroll-Lee, Ann L., Rochester, New York 14650-2201 (US); Teegarden, David M., Rochester, New York 14650-2201 (US); Bauer, Charles L., Rochester, New York 14650-2201 (US); Hoff, Joseph W., Rochester, New York 14650-2201 (US); Payne, Jason A., Rochester, New York 14650-2201 (US); Nair, Mridula, Rochester, New York 14650-2201 (US)
(74) Representative: Haile, Helen Cynthia

(57) **Abstract**

Optical compensator for a liquid crystal display comprising a transparent polymeric support, an orientation layer, and an optically anisotropic layer comprising a nematic liquid crystal, in order, wherein the anisotropic layer contains a colorless polymer having a weight average molecular weight that is greater that the entanglement molecular weight of the polymer. The uniformity and quality of this film is enhanced by the addition of a high molecular weight polymer.

## Description

This invention relates to an optical compensator for improving viewing angle characteristics of liquid crystal displays having a substrate, an orientation layer, and an optical anisotropic layer containing a high molecular weight polymer.

Current rapid expansion in the liquid crystal display (LCD) applications in various areas of information display is largely due to improvements of display qualities. Contrast, color reproduction, and stable gray scale intensities are important quality attributes for electronic displays, which employ liquid crystal technology. The primary factor limiting the contrast of a liquid crystal display is the propensity for light to "leak" through liquid crystal elements or cell, which are in the dark or "black" pixel state. Furthermore, the leakage and hence contrast of a liquid crystal display are also dependent on the angle from which the display screen is viewed. Typically the optimum contrast is observed only within a narrow viewing angle centered about the normal incidence to the display and falls off rapidly as the viewing angle is increased. In color displays, the leakage problem not only degrades the contrast but also causes color or hue shifts with an associated degradation of color reproduction. In addition to black-state light leakage, the narrow viewing angle problem in typical twisted nematic liquid crystal displays is exacerbated by a shift in the brightness-voltage curve as a function of viewing angle because of the optical anisotropy of the liquid crystal material.

Thus, one of the major factors measuring the quality of such displays is the viewing angle characteristic, which describes a change in contrast ratio from different viewing angles. It is desirable to be able to see the same image from a wide variation in viewing angles and this ability has been a shortcoming with liquid crystal display devices. One way to improve the viewing angle characteristic is to insert a compensator (also referred as compensation film, retardation film, or retarder) with proper optical properties between the polarizer and liquid crystal cell, such as disclosed in U.S. Patents 5,583,679 (Ito *et al*.), 5,853,801 (Suga *et al*.), 5,619,352 (Koch *et al*.), 5,978,055 (Van De Witte *et al*.), and 6,160,597 (Schadt *et al*.). A compensation film according to U.S. Patents 5,583,679 (Ito *et al*.) and 5,853,801 (Suga *et al*.), based on discotic liquid crystals which have negative birefringence, is widely used. It offers improved contrast over wider viewing angles, however, it suffers larger color shift for gray level images, compared to a compensator made of liquid crystalline materials with positive birefringence, according to Satoh et al. ("Comparison of nematic hybrid and discotic hybrid films as viewing angle compensator for NW-TN-LCDs", SID 2000 Digest, pp. 347-349, (2000)). To achieve comparable performance in the contrast ratio while reducing color shift, one alternative is to use a pair of crossed liquid crystal polymer films (LCP) on each side of liquid crystal cell, as discussed by Chen et al. ("Wide Viewing Angle Photoaligned Plastic Films", SID 99 Digest, pp.98-101 (1999)). This paper states that "since the second LPP/LCP retarder film is coated directly on top of the first LCP retarder film, the total thickness of the final wide-view retarder stack is only a few microns thin". Although they provide very compact optical component, one of the challenges of this method is to make two LCP layers crossed, particularly in a continuous roll to roll manufacturing process.

US Patent 5583679 teaches that a variety of materials (polymers and surfactants) can be added to discotic liquid crystals to affect the optical performance of the resultant discotic optical compensator film by changing the tilt angle of this film. It also mentions that these materials can only be added in small amounts so as to be compatible with the discotic liquid crystal. If too much of this new material is added to the discotic then the optical compensator film will not have the desired anisotropic optical properties (optical alignment and retardation). This patent pertains only to optical compensator films made from discotic (disc shaped) liquid crystals, it does not mention nematic (rod shaped) liquid crystals. It also does not mention use of such additives to affect film uniformity.

It is a problem to be solved to provide an optical compensator that widens the viewing angle characteristics of liquid crystal displays, in particular Twisted Nematic (TN), Super Twisted Nematic (STN), Optically Compensated Bend (OCB), In Plane Switching (IPS), or Vertically Aligned (VA) liquid crystal displays (these various liquid crystal display technologies have been reviewed in U.S. Patents 5,619,352 (Koch *et al*.), 5,410,422 (Bos), and 4,701,028 (Clerc *et al*.)), is readily manufactured in a roll-to-roll process. Such roll- to-roll processes require coating of an optically anisotropic layer on an orientation layer. Such layers can generally be prepared by coating solutions of polymerizable nematic liquid crystal on an orientation layer. Usually very low viscosity solutions are used in coating liquid crystals which causes many coating defects (i.e. mottle), leading to severely diminished performance of the optical compensator film and thus the complete liquid crystal display. Adding a high molecular weight polymer in coating solvents, provided they do not affect alignment and tilt angle of liquid crystals, can reduce these coating defects. While US Patent 5583679 mentions addition of such materials to discotic liquid crystals layer changes optical properties, in the present invention addition of a variety of high molecular weight polymers did not detrimentally affect the optical performance of the compensator film.

It is a problem to be solved to provide an optical compensator that widens the viewing angle characteristics of liquid crystal displays, and in particular of Twisted Nematic (TN), Super Twisted Nematic (STN), Optically Compensated Bend (OCB), In Plane Switching (IPS), or Vertically Aligned (VA) liquid crystal displays, is readily manufactured in a roll-to-roll coatable process with excellent layer uniformities and optical properties.

The invention provides an optical compensator for a liquid crystal display comprising a transparent polymeric support, an orientation layer, and an optically anisotropic layer comprising a nematic liquid crystal, in order, wherein the anisotropic layer contains a colorless polymer having a weight average molecular weight that is greater that the entanglement molecular weight of the polymer. The invention also provides a process for making such a compensator

The uniformity and quality of this film is enhanced by the use of a high molecular weight polymer.

FIG. 1 is a cross-sectional schematic view of a compensator of the present invention.

FIGS. 2A and 2B are cross-sectional schematic views of various embodiments of the present invention.

FIG. 3 is a schematic concept in accordance with the present invention.

FIG. 4 shows a liquid crystal display in combination with a compensator according to the present invention.

FIG. 5 shows a roll-to-roll process for making a compensator according to the present invention.

The current invention regarding the optical compensator for liquid crystal displays is described by referring to the drawings as follows.

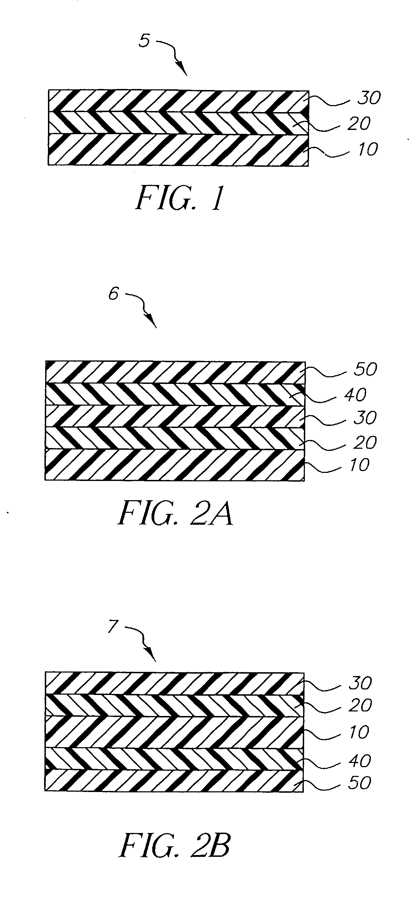

FIG. 1 shows a cross-sectional schematic view of an optical compensator **5** according to the present invention. This compensator comprises a substrate **10** of transparent material, such as glass or polymer. It should be understood that to be called as a substrate, a layer must be solid and mechanically strong so that it can stand alone and support other layers. A typical substrate is made of triacetate cellulose (TAC), polyester, polycarbonate, polysulfone, polyethersulfone, or other transparent polymers, and has a thickness of 25 to 500 micrometers. Substrate **10** typically has low in-plane retardation, preferably less than 10 nm, and more preferably less than 5 nm. In some other cases, the substrate **10** may have larger in-plane retardation between 15 to 150 nm. Typically, when the substrate **10** is made of triacetyl cellulose, it has out-of-plane retardation around -40 nm to -120 nm. This is a desired property when the compensator is designed to compensate a liquid crystal state with an ON voltage applied. The in-plane retardation discussed above is defined as the absolute value of (nx-ny)d and the out-of-plane retardation discussed above is defined as [nz-(nx+ny)/2]d, respectively. The refractive indices nx and ny are along the slow and fast axes in plane of the substrate, respectively, nz is the refractive index along the substrate thickness direction (Z-axis), and d is the substrate thickness. The substrate is preferably in the form of a continuous (rolled) film or web.

On the substrate **10,** an orientation layer **20** is applied, and an anisotropic layer **30** is disposed on top of layer **20**.

The orientation layer **20** can be oriented by various techniques. In one example, the orientation layer contains a rubbing-orientable material such as a polyimide or polyvinyl alcohol and can be oriented by a rubbing technique. In another example, the orientation layer contains a shear-orientable material and can be oriented by a shear-alignment technique. In another example, the orientation layer contains an electrically- or magnetically -orientable material and can be oriented by an electrical- or magnetic-alignment technique. In another example, the orientation layer can also be a layer of SiOx fabricated by oblique deposition. In another example, the orientation layer contains a photo-orientable material and can be oriented by a photo-alignment technique. Photo-orientable materials include, for example, photo isomerization polymers, photo dimerization polymers, and photo decomposition polymers. In a preferred embodiment, the photo-orientable materials are cinnamic acid derivatives as disclosed in U.S. Patent 6,160,597. Such materials may be oriented and simultaneously crosslinked by selective irradiation with linear polarized UV light.

The anisotropic layer **30** is typically a nematic liquid crystalline prepolymer when it is first disposed on the orientation layer **20**, and is crosslinked by a further UV irradiation, or by other means such as heat. In a preferred embodiment, the anisotropic layer contains a material such as a diacrylate or diepoxide with positive birefringence as disclosed in U.S. Patent 6,160,597 (Schadt *et al*.) and U.S. Patent 5,602,661 (Schadt *et al*.). The optic axis in the anisotropic layer **30** is usually tilted relative to the layer plane, and varies across the thickness direction. The anisotropic layer **30** in accordance with the present invention is applied from a liquid medium containing an organic solvent mixture and a high molecular weight polymer.

The high molecular weight polymer improves the dried coating uniformity of the anisotropic layer **30** without detrimentally affecting its adhesion to orientation layer **20** or its overall optical properties.

In general these high molecular weight polymers are colorless (no appreciable absorption between 400-800 nm) and are soluble in the coating solvent, and whose weight average molecular weight is greater than the entanglement molecular weight (i.e., a term often used to describe the molecular weight at which polymer entanglements become significant enough to contribute heavily to viscosity). More preferably their weight average molecular weight will be above 45,000. Most preferably their weight average molecular weight will be above 99,000. Furthermore, such polymers will not change the average tilt angle of the anisotropic layer **30** by more than ±10 degrees. More preferably such polymers will not change the average tilt angle of the anisotropic layer **30** by more than ± 5 degrees. Most preferably such polymers will not change the average tilt angle of the anisotropic layer **30** by more than ± 2 degrees. In addition, such polymers will not decrease the optical retardation of the anisotropic layer **30** by more than 50%. More preferably such polymers will not decrease the optical retardation of the anisotropic layer **30** by more than 35%. Most preferably such polymers will not decrease optical retardation of the anisotropic layer **30** by more than 5%.

The high molecular weight polymer useful in the present invention include: condensation polymers such as, polyesters, polyurethanes, polyamides, and polyimides; interpolymers prepared from ethylenically unsaturated monomers such as ethylene, vinyl acetate, vinyl halide, vinylidene halide, acrylonitrile, alkyl (meth)acrylates, hydroxyalkyl (meth)acrylates, (meth)acrylic acid, methacrylonitrile, glycidyl acrylate, glycidyl methacrylate, liquid crystal acrylates, styrene and its derivatives, vinyl alkyl ethers, vinyl alkyl ketones, butadiene, vinyl silanes; and others, and mixtures thereof; derivatives of poly(vinylacetate) or poly(vinyl alcohol) such as poly(vinylbutyral), poly(vinyl formal), poly(vinylcinnamate) and others; cellulose esters; and others.

Preferred polymers for use in the present invention include:
poly(vinylformal), poly(vinylacetate), poly(vinylbutyral) and
poly(vinylcinnamate).

The high molecular weight polymer is added from 2% to 20 wt% of the anisotropic layer **30**. More preferably such polymers are added from 2% to 10 wt% of the anisotropic layer **30**. Most preferably such polymers are added from 2% to 5 wt% of the anisotropic layer **30**. The amount of the high molecular weight polymer added is dependent on both the composition and molecular weight of the polymer employed since both of these can impact coating viscosity throughout the drying process.

The anisotropic layer may also contain addenda such as surfactants, light stabilizers and UV initiators UV initiatiors include materials such as benzophenone and acetophenone and their derivatives; benzoin, benzoin ethers, benzil, benzil ketals, fluorenone, xanthanone, alpha and beta naphthyl carbonyl compounds and ketones. Preferred initiators are alpha-hydroxyketones.

While this type of compensator described above provides some desired optical properties, it is not sufficient in many applications, for example, as a compensator for Twisted Nematic (TN) Liquid Crystal Displays (LCDs).

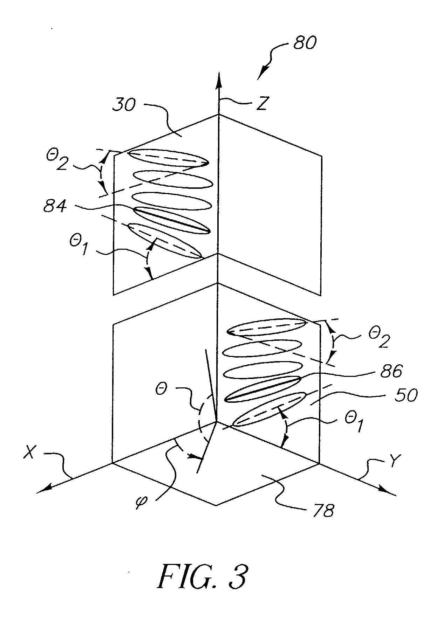

FIG. 2A illustrates a more sophisticated optical compensator 6 of the invention that contains a second orientation layer **40** and a second anisotropic layer **50** on top of the first anisotropic layer **30**. The second orientation layer **40** and the second anisotropic layer **50** are made essentially in the same way as the first orientation layer **20** and the first anisotropic layer **30** are made, except that the direction of the orientation may vary. For the purpose of illustration, refer to an XYZ coordinate system **80** as shown in FIG. 3. The X and Y axes are parallel to the plane of substrate **78**, and the Z-axis is perpendicular to the plane of substrate **78**. The angle ϕ is measured from the X-axis in the XY plane, and referred as an azimuthal angle. The angle θ is measured from the XY plane, and referred as a tilt angle.

It should be understood that the optic axis in each of the anisotropic layers **30** and **50** can have a variable tilt angle and/or variable azimuthal angle. For example, the optic axis **84** in the anisotropic layer **30** has a variable tilt angle θ across the Z-axis ranging from θ₁ to θ₂. In another example, the optic axis **84** has a fixed tilt angle θ across the Z-axis, namely, θ₁ = θ₂. In another example, the optic axis **84** is contained in one plane such as the XZ plane and consequently has a fixed azimuthal angle ϕ across the Z-axis. In another example, although the anisotropic layer **30** is still oriented along the preferred direction forced by the orientation layer at their interface, the optic axis **84** has a variable azimuthal angle ϕ across the Z-axis. The azimuthal angle of the optic axis **84** can be varied by adding a proper amount of chiral dopant into the anisotropic layer **30**. In another example, the optic axis **84** has a variable tilt angle θ and a variable azimuthal angle ϕ across the Z-axis. Like the optic axis **84** of the anisotropic layer **30**, the optic axis **86** of the anisotropic layer **50** can also have a fixed tilt angle, a variable tilt angle, a fixed azimuthal angle, a variable azimuthal angle, or a variable tilt angle and a variable azimuthal angle across the Z-axis. The anisotropic layers **30** and **50** typically have different optic axis. Preferably the anisotropic layer **30** is positioned orthogonally relative to the respective optic axis of the anisotropic layer **50** about an axis perpendicular to the plane of the substrate. Even though the optic axis of the anisotropic layer **30** is preferred to be orthogonal (or ±90 degrees) relative to the respective (or counterpart) optic axis of the anisotropic layer **50** about an axis perpendicular to the plane of the substrate, it should be understood that the angle between the optic axis of the two anisotropic layers can be in a range of 85 to 95 degrees to be considered as orthogonal.

For the manufacture of more complex layer structures than that illustrated in FIG. 2A, additional orientation and anisotropic layers can be applied in further steps.

FIG. 2B illustrates another optical compensator 7 of the invention in which the second orientation layer **40** and the second anisotropic layer **50** are on the opposite side of the substrate from the first orientation layer **20** and the first anisotropic layer **30**.

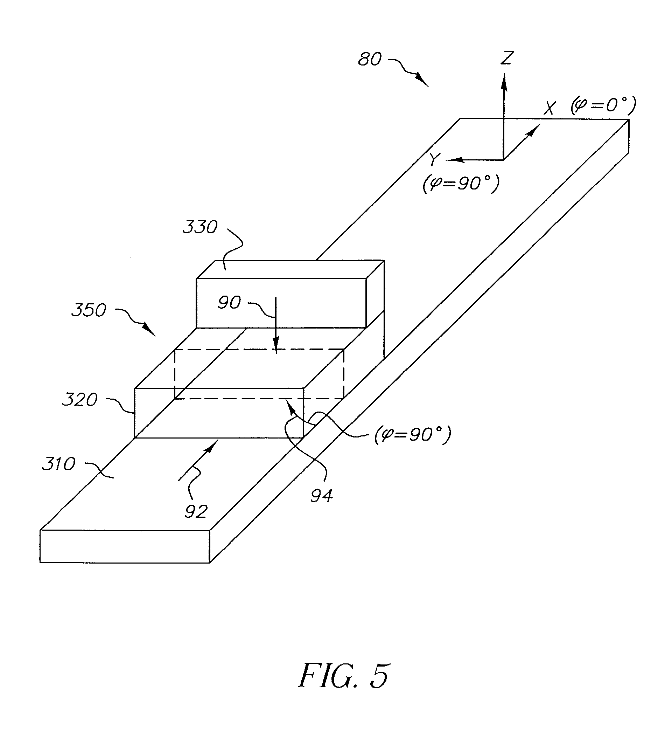

**FIG. 5** shows another aspect of the present invention. A compensator **350** can be manufactured on a continuous roll-to-roll basis as shown in FIG. 5 which shows part of a schematic view of the process. The roll-to-roll process of forming a compensator **350** comprises the steps of applying a photo-alignable orientation layer **320**, for example by coating by any known method such as extrusion hopper coating, roll-coating, slide hopper coating, or curtain coating, the orientable material in a solvent, onto a moving substrate **310,** drying the orientation layer **320**, photo-aligning (orienting) the orientation layer **320** in a predetermined alignment direction ϕ **94**, (for the purpose of illustration ϕ =90°) relative to the roll moving direction **92**, coating (as described earlier)an anisotropic layer **330** comprising a polymerizable material in a solvent carrier onto the orientation layer **320**, drying the anisotropic layer **330**, polymerizing the anisotropic layer **330** to form a continuous web of compensator. Note that for clarity, FIG. 5 only shows part of the orientation layer **320** and anisotropic layer **330**.

In one embodiment, the orientation layer is oriented by rubbing the orientation layer in a direction **94** of 90 degrees (ϕ=90°) relative to the roll moving direction **92**. In another embodiment, the orientation layer is oriented by a photo-alignment technique, for example, the orientation layer is exposed to a linearly polarized ultraviolet (UV) light indicated by **90**. It may or may not be collimated, however, the projection (pointing along **94**) of the principal ray of the light **90** onto the roll makes an angle of 90 degrees relative to the roll moving direction.

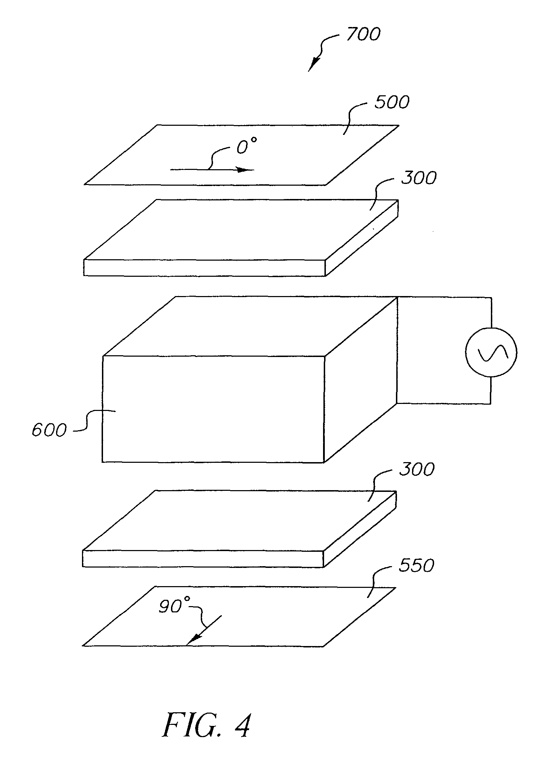

FIG. 4 is a schematic view of a liquid crystal display **700** comprising the compensator 300 in accordance with the present invention. In FIG. 4B, one compensator **300** is placed between the first polarizer **500** and the liquid crystal cell **600**, and another compensator **300** is placed between a second polarizer **550** and the liquid crystal cell **600**. The liquid crystal cell **600** is preferred to be operated in a Twisted Nematic (TN), Super Twisted Nematic (STN), Optically Compensated Bend (OCB), In Plane Switching (IPS), or Vertically Aligned (VA) mode. The polarizers **550** and **500** can be arranged crossed or parallel depending on the operation principles of the liquid crystal cell. The orientation layer in the compensator can be arranged parallel, perpendicular, or at a predetermined angle relative to the first polarizer **500**. The liquid crystal cell can also be operated in a reflective mode, in which it may only require one polarizer.

The invention may be used in conjunction with electronic imaging device comprising a liquid crystal display device. The energy required to achieve this control is generally much less than that required for the luminescent materials used in other display types such as cathode ray tubes. Accordingly, liquid crystal technology is used for a number of applications, including but not limited to digital watches, calculators, portable computers, electronic games for which light weight, low power consumption and long operating life are important features.

The present invention is illustrated in more detail by the following non-limiting examples.

### COMPARISON EXAMPLE A

### Coating of photo-aligned anisotropic layer for layer uniformity.

Onto a photo-aligned orientation layer prepared from a mixture of VANTICO Staralign 2110 and Staralign 2100 photo-aligning vinyl cinnamate polymers on cellulose triacetate support, a methyl ethyl ketone solution of crosslinkable diacrylate nematic liquid crystalline compound (7 wt%) (obtained by diluting 30 wt% stock solution of VANTICO LCP 483) was slot hopper cast. The sample was then heated to 55 °C to orient the nematic liquid crystalline layer and remove solvent. The sample was cooled to room temperature and anisotropic layer fixed by exposing to 365 nm light (300-1000 mJ/cm²) under an atmosphere of nitrogen. The sample was the viewed between crossed polarizers and judged for appearance.

### EXAMPLE 1

### Coating of photo-aligned anisotropic layer containing a high molecular weight polymer to improve layer uniformity.

Onto a photo-aligned orientation layer prepared from a mixture of VANTICO Staralign 2110 and Staralign 2100 photo-aligning vinyl cinnamate polymers on cellulose triacetate support, a methyl ethyl ketone solution of crosslinkable diacrylate nematic liquid crystalline compound (7 wt%) (obtained by diluting 30 wt% stock solution of VANTICO LCP 483) and poly(vinylacetate) having a weight average molecular weight of 185,000 (2.4 wt% of dried anisotropic film) was slot hopper cast. The sample was then heated to 55 °C to orient the nematic liquid crystalline layer and remove solvent. The sample was cooled to room temperature and anisotropic layer fixed by exposing to 365 nm light (300-1000 mJ/cm²) under an atmosphere of nitrogen.
Comparison Example A and Example 1 were then viewed between crossed polarizing filters to determine the effect of the high molecular weight polymer on the resulting dried anisotropic layer uniformity, and a visual rating was assigned. The rating considered all obvious post-application imperfections, including mottle, drying convection cells, and repellencies. A rating of 1 corresponds to the poorest possible quality and a rating of 10 the best possible quality.

**TABLE 1**

| Sample | Layer Uniformity as Observed Between Crossed Polarizers |
|---|---|
| Comparison Example A | 2 |
| Example 1 | 8 |

### COMPARISON EXAMPLE B

### Preparation of photo-aligned anisotropic layer.

On a clean glass plate, a coating solution containing a mixture of VANTICO Staralign 2110 and Staralign 2100 photo-aligning vinyl cinnamate polymers (1 wt% total solids in MEK) was spun cast (@ 1000 rpm). Sample was dried at 55 °C for 5 min. and then exposed to 308 nm polarized light (15-30 mJ/cm²) at an inclination of 20 degrees away from normal angle of incidence to obtain a photo-aligned orientation layer. Typically this will produce a layer thickness between 30-100 nm as measured by ellipsometry (J. A. Woollam Co., Model M2000V). On the orientation layer a methyl ethyl ketone solution of crosslinkable diacrylate nematic liquid crystalline compound
(7 wt%) (obtained by diluting 30 wt% stock solution of VANTICO LCP 483) was spun cast (@ 1000 rpm). The sample was then heated at a temperature of 55 °C for 3 minutes to orient the nematic liquid crystalline layer and remove solvent. The sample was cooled to room temperature and anisotropic layer fixed by exposing to 365 nm light (300-1000 mJ/cm²) under an atmosphere of nitrogen. In-plane retardation, average tilt angle, and thickness of the anisotropic layer were measured by ellipsometry (J. A. Woollam Co., Model M2000V). The measured average tilt angle method had errors of ± 2.0 degrees.

### EXAMPLE 2

### Preparation of photo-aligned anisotropic layer with added poly(vinylacetate)

On a clean glass plate, a coating solution containing a mixture of VANTICO Staralign 2110 and Staralign 2100 photo-aligning polymers (1 wt% solids in MEK) was spun cast (@ 1000 rpm). Sample was dried at 55 °C for 5 min. and then exposed to 308 nm polarized light (15-30 mJ/cm²) at an inclnation of 20 degrees away from normal angle of incidence to obtain a photo-aligned orientation layer. Typically this will produce a layer thickness between 30-100 nm as measured by ellipsometry (J. A. Woollam Co., Model M2000V).

On the orientation layer a methyl ethyl ketone solution of crosslinkable diacrylate nematic liquid crystalline compound (7 wt%) (obtained by diluting 30 wt% stock solution of VANTICO LCP 483) and a high molecular weight polymer (at a wt% of dried anisotropic film as indicated in Table 2) was spun cast (@ 1000 rpm). The sample was then heated at a temperature of 55 °C for 3 minutes to orient the nematic liquid crystalline layer and remove solvent. The sample was cooled to room temperature and anisotropic layer fixed by exposing to 365 nm light (300-1000 mJ/cm²) under an atmosphere of nitrogen. In-plane retardation, average tilt angle, and thickness of the anisotropic layer were measured by ellipsometry (J. A. Woollam Co., Model M2000V). The measured average tilt angles had errors of ± 2.0 degrees.

**TABLE 2**

| Sample (wt% in dried film) | Polymer Weight Ave Mol. Wt. | Layer Thickness , (nm) | In Plane Retardation nm(measured @ 550 nm) | Average Tilt Angle (± 2) |
|---|---|---|---|---|
| Comparison Ex. B | No polymer added | 525 | 43 | 26 |
| poly(vinylacetate) (2.4 wt%) | 185,000 | 500 | 43 | 23 |
| poly(vinylcinnamate) (2.4 wt%) | 88,000 | 540 | 41 | 24 |
| poly(vinylphenyl acetate) (13 wt%) | 128,000 | 581 | 36 | 26 |
| Butvar 76 (1 wt%) | 90,000-120,000 | 736 | 57 | 25 |

The aforementioned examples clearly demonstrate that compared to comparison example B addition of a high molecular weight polymer does not change optical properties of anisotropic layer.

The invention includes embodiments wherein:
the type and amount of colorless polymer is not sufficient to alter the tilt angle of the anisotropic layer by more than ±5° compared to the same layer without the colorless polymer;
the type and amount of colorless polymer is not sufficient to alter the tilt angle of the anisotropic layer by more than ±2° compared to the same layer without the colorless polymer;
the type and amount of colorless polymer is not sufficient to alter the retardation of the anisotropic layer by more than 50%, desirably not more than 5%, compared to the same layer without the colorless polymer;
the colorless polymer comprises a poly(vinylacetate) or poly(vinyl alcohol).
the colorless polymer comprises from 2 to 20 wt%, suitably 2 to 10% and desirably 2 to 10%, of the anisotropic layer; and
the nematic liquid crystal is a positively birefringent UV crosslinked material.

Also included is a process for preparing the compensator comprising:
a) coating an orientation layer comprising a photo-alignable polymer in a solvent over a transparent support;
b) drying the orientation layer;
c) photo-aligning the orientation layer in a predetermined direction;
d) coating over the orientation layer an anisotropic liquid crystal layer comprising a polymerizable material in a solvent carrier wherein the anisotropic layer also contains a colorless polymer having a weight average molecular weight that is greater than the entanglement molecular weight of the polymer;
e) drying the anisotropic layer;
f) polymerizing the anisotropic layer
g) repeating steps a) through f) coating over the polymerized anisotoropic layer off) but photo-aligning the orientation layer at a predetermined angle to the direction in step c); and a continuous process for making an optical compensator on a support web, comprising the steps of:
   a) coating an orientation layer comprising a photo-alignable polymer in an organic solvent over the support;
   b) drying the orientation layer;
   c) photoaligning the orientation layer in a predetermined direction relative to the web moving direction;
   d) coating over the orientation layer an anisotropic layer comprising a polymerizable material and a colorless polymer, having a weight average molecular weight that is greater than the entanglement molecular weight of the polymer, in a solvent carrier;
   e) drying the anisotropic layer;
   f) polymerizing the anisotropic layer to form a first continuous web of a multilayer integral component;
   g) repeating the above steps a) through f) coating over the anisotropic layer obtained from e) but photo-aligning the orientation layer at a predetermined angle to the direction in step c).

The entire contents of the patents and other publications referred to in this specification are incorporated herein by reference.

## Claims

1. An optical compensator for a liquid crystal display comprising a transparent polymeric support, an orientation layer, and an optically anisotropic layer comprising a nematic liquid crystal, in order, wherein the anisotropic layer contains a colorless polymer having a weight average molecular weight that is greater that the entanglement molecular weight of the polymer.

2. The compensator of claim 1 wherein the molecular weight of the colorless polymer is above 45,000.

3. The compensator of claim 1 wherein the molecular weight of the colorless polymer is above 99,000.

4. The compensator of claim 1 wherein the type and amount of colorless polymer is not sufficient to alter the tilt angle of the anisotropic layer by more than ±10° compared to the same layer without the polymer.

5. The compensator of claim 1 wherein the type and amount of colorless polymer is not sufficient to alter the retardation of the anisotropic layer by more than 35%° compared to the same layer without the polymer.

6. The compensator of claim 1 wherein the colorless polymer comprises a condensation or vinyl polymer or copolymer.

7. The compensator of claim 1 wherein the colorless polymer comprises a polyester, polyurethane, polyamide, polyimide or copolymer thereof.

8. The compensator of claim 1 wherein the colorless polymer comprises a polymer prepared from ethylenically unsaturated monomers including ethylene, vinyl acetate, vinyl halide, vinylidene halide, acrylonitrile, alkyl (meth)acrylates, hydroxyalkyl (meth)acrylates, (meth)acrylic acid, methacrylonitrile, glycidyl acrylate, glycidyl methacrylate, styrene, vinyl alkyl ethers, vinyl alkyl ketones, butadiene, vinyl silanes; and mixtures, copolymers and derivatives thereof.

9. The compensator of claim 1 wherein the colorless polymer comprises a poly(vinylbutyral), poly(vinyl formal), or poly(vinylcinnamate).

10. The compensator of claim 1 wherein the colorless polymer comprises a cellulosic polymer.

11. A process for preparing a compensator of claim 1 for a liquid crystal display comprising providing a transparent support, coating an orientation layer from an organic solvent over the support and then drying and aligning the orientation layer, and then coating and polymerizing over the orientation layer an anisotropic liquid crystal layer comprising a polymerizable material in a solvent carrier wherein the anisotropic layer also contains a colorless polymer having a weight average molecular weight that is greater than the entanglement molecular weight of the polymer.

12. The process of claim 11 wherein the colorless polymer has a weight average molecular weight that is above 45,000.
